(19) Europäisches Patentamt

European Patent Office

Office européen des brevets

(11) EP 1 286 275 A1

(12) **EUROPÄISCHE PATENTANMELDUNG**

(43) Veröffentlichungstag:
26.02.2003 Patentblatt 2003/09

(51) Int Cl.7: **G06F 17/11**, G06F 17/10, G06F 17/12

(21) Anmeldenummer: 02000744.9

(22) Anmeldetag: 12.01.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **26.01.2001 DE 10103410**

(71) Anmelder: **Framatome ANP GmbH**
**91058 Erlangen (DE)**

(72) Erfinder:
• **Kröger, Joachim**
**91315 Höchstadt/ Aisch (DE)**
• **Schmidt, Gerhard**
**95131 Schwarzenbach a. W. (DE)**

(74) Vertreter: **Tergau & Pohl Patentanwälte**
**Mögeldorfer Hauptstrasse 51**
**90482 Nürnberg (DE)**

(54) **Verfahren und System zur Aufbereitung eines Datensatzes**

(57) Ein Verfahren zur Aufbereitung eines aus einer Anzahl von als Ausgangswerte ($A_i$) vorliegenden Parametern ($\dot{m}_1$, $\dot{m}_2$, $\vartheta_1'$, $\vartheta_1''$, $\vartheta_2'$, $\vartheta_2''$) bestehenden Datensatzes (D), die einer Anzahl von vorgegebenen Randbedingungen unterworfen sind, soll in vergleichsweise kurzer Bearbeitungszeit auch bei komplexen funktionalen Zusammenhängen zwischen den Parametern bei den Randbedingungen eine zuverlässige Konsolidierung des Datensatzes (D) im Hinblick auf die vorgegebenen und streng einzuhaltenden Randbedingungen ermöglichen. Dazu werden erfindungsgemäß eine Vielzahl von aus Zufalls- und aus Rechenwerten ($Z_i$, $R_i$) für die Parameter ($\dot{m}_1$, $\dot{m}_2$, $\vartheta_1'$, $\vartheta_1''$, $\vartheta_2'$, $\vartheta_2''$) zusammengesetzten Testdatensätzen (T) derart erzeugt, daß jeweils anhand der Randbedingungen Rechenwerte ($R_i$) für eine der Anzahl der Randbedingungen entsprechende Zahl der Parameter ($\dot{m}_1$, $\dot{m}_2$, $\vartheta_1'$, $\vartheta_1''$, $\vartheta_2'$, $\vartheta_2''$) aus Zufallswerten ($Z_i$) für die übrigen Parameter ($\dot{m}_1$, $\dot{m}_2$, $\vartheta_1'$, $\vartheta_1''$, $\vartheta_2'$, $\vartheta_2''$) ermittelt werden, wobei jeder Zufallswert ($Z_i$) durch Modifikation des Ausgangswerts ($A_i$) des entsprechenden ($\dot{m}_1$, $\dot{m}_2$, $\vartheta_1'$, $\vartheta_1''$, $\vartheta_2'$, $\vartheta_2''$) um einen innerhalb eines diesem zugeordneten Toleranzbereichs ($T_i$) stochastisch ausgewählten Korrekturwert ($K_i$) erzeugt wird, wobei aus den Testdatensätzen (T) anhand eines vorgegebenen Filterkriteriums ein Enddatensatz ausgewählt wird.

Fig. 3

# EP 1 286 275 A1

## Beschreibung

Die Erfindung betrifft ein Verfahren zur Aufbereitung eines aus einer Anzahl von als Ausgangswerte vorliegenden aus Parametern bestehenden Datensatzes, die eine Anzahl von vorgegebenen Randbedingungen unterworfen sind. Sie bezieht sich weiter auf ein System zur Aufbereitung eines derartigen Datensatzes.

Bei der Verarbeitung von Daten können in vielen Fällen Datensätze zur Auswertung kommen, die aus einer Anzahl von Parametern bestehen. Die Parameter können dabei beispielsweise Meßwerte von physikalischen Größen sein, die im Rahmen einer Aufbereitung für eine Weiterverarbeitung gemeinsam auszuwerten sind und dazu zu einem Datensatz zusammengefaßt sind. Bei derartigen, zu einem Datensatz zusammengefaßten Parametern ist es denkbar, daß die Parameter in der Art einer einfachen oder mehrfachen Überbestimmung vorgegebenen Randbedingungen unterworfen sind, die beispielsweise aus physikalischen Gründen unbedingt zu erfüllen sind. Dabei kann es beispielsweise vorkommen, daß physikalisch korrelierte Parameter, die nachweislich einem vorgegebenen Zusammenhang unterworfen sind, in der Art einer redundanten Messung getrennt voneinander bestimmt werden, wobei anhand der die Parameter verknüpfenden Randbedingung eine Konsistenzprüfung vorgenommen werden kann.

Derartige Datensätze mit einer Anzahl von Parametern, die eine Anzahl von vorgegebenen Randbedingungen unterworfen sind, können insbesondere bei der Abnahme oder Inbetriebnahme von technischen Anlagen oder deren Komponenten auftreten. Bei der Abnahme oder Inbetriebnahme der jeweiligen Anlagenkomponente wird dabei üblicherweise eine Vielzahl von Parametern gemessen, die in der Art von redundanten Informationen zumindest einigen Randbedingungen unterliegen. Beispielsweise ist ein innerhalb einer Kraftwerksanlage eingesetzter Wärmetauscher üblicherweise charakterisiert durch Betriebsparameter des Primär- oder beheizenden Mediums und durch Betriebsparameter des Sekundäroder beheizten Mediums. Als Betriebsparameter können dabei für das Primäroder beheizende Medium, dessen Massenstrom $\dot{m}_1$, dessen Eintrittstemperatur in den Wärmetauscher $\vartheta_1{'}$ und dessen Austrittstemperatur aus dem Wärmetauscher $\vartheta_1{''}$ und für das Sekundär- oder beheizte Medium, dessen Massenstrom $\dot{m}_2$, dessen Eintrittstemperatur in den Wärmetauscher $\vartheta_2{'}$ und dessen Austrittstemperatur aus dem Wärmetauscher $\vartheta_2{''}$ zu berücksichtigen sein. Diese insgesamt sechs für den Betrieb des Wärmetauschers charakteristischen Betriebsparameter unterliegen den Randbedingungen, daß aus physikalischen Gründen die Entalpiebilanz eingehalten werden und die Wärmeübertrager-Charakteristik konsistent sein muß.

Bei der Abnahme oder Inbetriebnahme der genannten Anlagekomponente werden derartige Parameter gemessen. Durch die Messung unterliegen die Parameter jedoch Meßfehlern, die sowohl systematische als auch zufällige Beiträge umfassen können. Aus diesen Gründen weichen die Meßwerte für die Parameter üblicherweise von dem wahren Wert oder physikalischen Wert des jeweiligen Parameters ab. Dies kann unter anderem dazu führen, daß die aus physikalischen Gründen notwendigerweise einzuhaltenden Randbedingungen unter den Parametern innerhalb eines Datensatzes verletzt sind. Dies könnte zu Fehlern bei der Datenauswertung und zu Inkonsistenzen bei der Weiterverarbeitung entsprechend fehlerbehafteter Datensätze führen.

Um derartige Inkonsistenzen und Verletzungen von Randbedingungen zwischen Parametern eines Datensatzes bei der weiteren Auswertung des Datensatzes zu vermeiden, kann in der Art einer Konsolidierung eine Aufbereitung eines derartigen Datensatzes vorgesehen sein. Dabei liegt die Annahme zugrunde, daß die den Datensatz bildenden Parameter die vorgegebenen Randbedingungen in jedem Fall erfüllen sollten. Ein einer Weiterverarbeitung zuzuführender Datensatz wird dabei als vergleichsweise belastbar oder zuverlässig angesehen, wenn sichergestellt ist, daß die ihn bildenden Parameterwerte die Randbedingungen erfüllen, selbst wenn dabei eine Abweichung der einzelnen Parameterwerte von den etwa gemessenen Werten in Kauf zu nehmen ist. Eine derartige Abweichung ist insbesondere deswegen tolerabel, da bekanntermaßen die Messungen ohnehin mit Meßfehlern behaftet sind.

Für eine derartige Konsolidierung oder Aufbereitung eines Datensatzes kann eine sogenannte Ausgleichung bedingter Beobachtungen zum Einsatz kommen. Bei einer derartigen Ausgleichung bedingter Beobachtungen werden die vorgegebenen Randbedingungen als Gleichungen formuliert, die für die Parameterwerte eines Datensatzes den Wert Null annehmen müssen. Bei Verletzung der Randbedingungen ergibt sich beim Einsetzen der Parameterwerte in diese Gleichungen ein von Null verschiedener Ausgangswert. Um diesen auch als Widerspruch bezeichneten, von Null verschiedenen Ausgangswert zur Erfüllung der vorgegebenen Randbedingung auf den Wert Null zurückzuführen, werden die Parameterwerte in der zugrundeliegenden Gleichung mit als Verbesserung bezeichneten Korrekturwerten beaufschlagt, wobei der Wert der so modifizierten Gleichung zwingend auf Null gesetzt wird. Auf diese Weise entsteht unter Berücksichtigung sämtlicher vorgegebenen Randbedingungen ein mehrdimensionales Gleichungssystem mit den Korrekturwerten oder Verbesserungen als Parameter. Das solchermaßen entstehende mehrdimensionale Gleichungssystem wird anschließend durch kontinuierliche Modifikation der Korrekturwerte oder Verbesserungen derart variiert, daß sich in der Summe der Quadrate der Verbesserungen ein Minimum einstellt. Mit anderen Worten: unter strikter Einhaltung der vorgegebenen Randbedingungen wird derjenige Satz an Verbesserungen oder Korrekturwerten ausgewählt, der dem Betrag nach ein minimale Abweichung von den ursprünglichen Ausgangswerten darstellt.

Aus diesem Vorgehen wird ein verbesserter Datensatz ermittelt, dessen Parameterwerte einerseits sämtliche vorgegebenen Randbedingungen strikt erfüllen und andererseits die ursprünglich vorliegenden Parameterwerte bestmöglich annähern. Der solchermaßen verbesserte Datensatz kann sodann einer weiteren Bearbeitung zugeführt werden, wobei Inkonsistenzen aufgrund sich widersprechender Parameterwerte oder aufgrund der Verletzung von Randbedingungen sicher vermieden sind. Allerdings hat ein derartiges Verfahren zur Aufbereitung eines Datensatzes den Nachteil, daß die genannten Modifikationen aufgrund der hohen Komplexität der erforderlichen mathematischen Manipulationen lediglich bei im wesentlichen linearen funktionalen Zusammenhängen zwischen den Parametern anwendbar sind. Abweichende funktionale Zusammenhänge sind hingegen, insbesondere im Hinblick auf verfügbare Rechentechniken oder Rechenkapazitäten, nur bedingt beherrschbar. Zudem ist ein derartiges Verfahren zur Aufbereitung eines Datensatzes vergleichsweise aufwendig und, insbesondere hinsichtlich der benötigten Rechenkapazität, vergleichsweise zeitaufwendig.

Der Erfindung liegt daher die Aufgabe zugrunde, ein Verfahren zur Aufbereitung eines aus einer Anzahl von als Ausgangswerte vorliegenden Parametern bestehenden Datensatzes, die einer Anzahl von vorgegebenen Randbedingungen unterworfen sind, anzugeben, mit dem in vergleichsweise kurzer Bearbeitungszeit auch bei komplexen funktionalen Zusammenhängen zwischen den Parametern bei den Randbedingungen eine zuverlässige Konsolidierung des Datensatzes im Hinblick auf die vorgegebenen und streng einzuhaltenden Randbedingungen ermöglicht ist. Weiterhin soll ein für die Durchführung des Verfahrens besonders geeignetes System angegeben werden.

Bezüglich des Verfahrens wird diese Aufgabe erfindungsgemäß gelöst, indem eine Vielzahl von aus Zufalls- und aus Rechenwerten für die Parameter zusammengesetzten Testdatensätzen derart erzeugt werden, daß jeweils anhand der Randbedingungen Rechenwerte für eine der Anzahl der Randbedingungen entsprechende Zahl der Parameter aus Zufallswerten für die übrigen Parameter ermittelt werden, wobei jeder Zufallswert durch Modifikation des Ausgangswerts des entsprechenden Parameters um einen innerhalb eines diesem zugeordneten Toleranzbereichs stochastisch ausgewählten Korrekturwert erzeugt wird, und indem aus den Testdatensätzen anhand eines vorgegebenen Filterkriteriums ein Enddatensatz ausgewählt wird.

Die Erfindung geht dabei von der Überlegung aus, daß eine zuverlässige Konsolidierung des Datensatzes auf einer strengen Einhaltung sämtlicher vorgegebenen Randbedingungen gegründet sein sollte. Dies ist erreichbar, indem jede Randbedingung als Gleichung oder Zuordnungsvorschrift zwischen den jeweiligen Parametern ausgedrückt wird. Eine Einhaltung der jeweiligen Randbedingung ist dabei gewährleistet, indem anhand der entsprechenden Gleichung ein Rechenwert für zumindest einen der Parameter anhand von Vorgaben für die anderen Parameter ermittelt wird. Mit anderen Worten: jede Randbedingung wird dadurch eingehalten, daß ein Rechenwert für einen der Parameter nach der jeweils entsprechenden Gleichung aus Werten für die gegebenenfalls betroffenen übrigen Parameter berechnet wird. Die Vorgabe der weiteren, zur Vervollständigung eines Testdatensatzes notwendigen Parameterwerte erfolgt dabei auf Zufallsbasis. Dabei ist jedem Parameter ein Toleranzbereich zugeordnet, innerhalb dessen der jeweilige Parameterwert notwendigerweise zu liegen hat. Innerhalb des Toleranzbereichs wird dabei dem betroffenen Parameter ein zufällig ausgewählter Wert zugeordnet. Der Toleranzbereich knüpft dabei an den dem entsprechenden Parameter zugeordneten Ausgangswert innerhalb des ursprünglich vorliegenden aufzubereitenden Datensatzes an.

Auf diese Weise wird in der Art einer sogenannten Monte-Carlo-Simulation eine Vielzahl von Testdatensätzen erzeugt, von denen jeder zum einen aus Rechenwerten für einige Parameter, die in ihrer Anzahl der Anzahl der vorgegebenen Randbedingungen oder der Überbestimmung entsprechen, und zum anderen von innerhalb des jeweiligen Toleranzbereichs liegenden Zufallswerten für die übrigen Parameter zusammengesetzt ist. Sämtliche Testdatensätze erfüllen dabei hinsichtlich ihrer Parameterwerte notwendigerweise alle vorgegebenen Randbedingungen und sind somit im Hinblick auf die Randbedingungen selbstkonsistent. Aus dieser Vielzahl von im Hinblick auf die Randbedingungen geeigneten und konsolidierten Testdatensätzen wird anschließend ein Enddatensatz ausgewählt, wobei die Auswahl anhand eines vorgegebenen Filterkriteriums erfolgt.

Insbesondere kann dabei auch vorgesehen sein, als Filterkriterium eine sogenannte Akzeptanzschwelle heranzuziehen, bei der in der Art einer Toleranzgrenze beispielsweise alle diejenigen Testdatensätze als akzeptabel angesehen werden, die in Gesamtheit ihrer Parameterwerte um nicht mehr als einen zulässigen Maximalbetrag von einem Referenzdatensatz abweichen. Dabei können sämtliche solchermaßen als akzeptabel erkannten Testdatensätze als Enddatensätze für eine Weiterverarbeitung bereitgestellt werden, wobei erst in einem nachgeordneten Bearbeitungsschritt eine weitere Analyse der somit bereitgestellten Mehrzahl von Enddatensätzen erfolgt.

Die Aufbereitung kann für einen Datensatz mit Ausgangswerten verschiedener Herkunft für die Parameter angewendet werden. Insbesondere können die Ausgangswerte der Parameter aus vorgeschalteten Berechnungsstufen übernommen werden. Besonders geeignet ist das Verfahren jedoch zur Aufbereitung eines Datensatzes, bei dem die Ausgangswerte für die Parameter als Meßwerte vorliegen. Gerade in diesem Fall ist nämlich aufgrund auftretender Meßunsicherheiten bei der Ermittlung der Ausgangswerte für die Parameter eine scheinbare Verletzung der Randbedingungen durch den ursprünglich vorliegenden Datensatz denkbar, ohne daß die sogenannten wahren Werte der jeweiligen Parameter die Randbedingungen tatsächlich verletzen. Gerade in diesem Fall ist eine entsprechende Aufbereitung des Datensatzes, die die Qualität der Parameterwerte durch Verkleinerung oder Eliminierung der Meßunsicherheiten verbessert, besonders günstig.

Die den Parametern zugeordneten Toleranzbereiche können insbesondere im Hinblick auf entsprechende Erfahrungswerte, beispielsweise bekannte Meßgenauigkeiten für den jeweiligen Parameter, vorgegeben werden. Dabei wird vorteilhafterweise jedem Parameter jeweils ein Toleranzbereich zugeordnet, wobei der jeweilige Toleranzbereich bei der Ermittlung der Zufallswerte für die Parameter jeweils unmittelbar berücksichtigt wird. Vorteilhafterweise werden aber auch die Toleranzbereiche derjenigen Parameter berücksichtigt, für die anhand der Randbedingungen auf der Grundlage der übrigen Parameter die Rechenwerte ermittelt werden. Eine Berücksichtigung der Toleranzbereiche auch für diese Parameter kann dabei in der Art eines Filterkriteriums derart erfolgen, daß nur diejenigen Testdatensätze für eine Weiterverarbeitung zugelassen und bei der Auswahl des Enddatensatzes berücksichtigt werden, bei denen jeder Rechenwert jeweils innerhalb des dementsprechenden Parameter zugeordneten Toleranzbereichs liegt. Bei derartig vorgefilterten Testdatensätzen kommen somit nur diejenigen Testdatensätze zur weiteren Auswertung, bei denen einerseits in der Art einer Selbstkonsistenz sämtliche vorgegebenen Randbedingungen eingehalten sind, und bei denen andererseits sämtliche Parameterwerte, also sowohl die Rechenwerte für die anhand der Randbedingungen ermittelten Parameter als auch die Zufallswerte für die übrigen Parameter, innerhalb des jeweiligen Toleranzbereichs liegen und somit im Hinblick auf zugrundeliegende physikalische Erfahrungen oder Erkenntnisse als akzeptabel angesehen werden.

Die Auswahl des Enddatensatzes aus dem zur Auswahl zugelassenen Testdatensätzen erfolgt vorzugsweise derart, daß derjenige Testdatensatz als Enddatensatz für eine Weiterverarbeitung zur Verfügung gestellt wird, der einerseits sämtliche vorgegebenen Randbedingungen ohne weiteres erfüllt und anderseits den ursprünglich vorliegenden, durch die Ausgangswerte für die Parameter gegebenen Datensatz weitestgehend annähert. Dazu wird vorteilhafterweise als Enddatensatz derjenige Testdatensatz ausgewählt, bei dem die Summe der Quadrate der Abweichungen des Rechen- bzw. Zufallswerts vom Ausgangswert jedes Parameters minimal ist.

Dabei kann die Summe der Quadrate der sogenannten absoluten Korrekturen ausgewertet werden. Die absoluten Korrekturen stellen dabei die jeweiligen Differenzen des Rechen- bzw. Zufallswerts vom Ausgangswert des jeweiligen Parameters dar. Das Quadrat dieser absoluten Korrektur ist bei der Summenbildung mit einem parameterspezifischen Wichtungsfaktor versehen. Vorteilhafterweise wird jedoch bei der Auswertung der Summe der Quadrate der Abweichungen die Summe der Quadrate der sogenannten relativen Korrekturen zugrunde gelegt, wobei als zu quadrierende Größe die Abweichung des jeweiligen Rechen- bzw. Zufallswerts vom Ausgangswert, geteilt durch einen parameterspezifischen Referenzwert, zugrunde gelegt wird. Der parameterspezifische Referenzwert weist dabei vorzugsweise dieselbe Dimension oder physikalische Einheit auf wie der Parameter und kann insbesondere einen Äquivalenzwert für eine Auslegungsgröße der zu untersuchenden Komponente insgesamt, wie z. B. ihre Nennleistung, angeben.

Bei der Vorgabe der Zufallswerte für die jeweiligen Parameter wird in der Art einer Monte-Carlo-Simulation auf geeignete Weise ein Zufallswert innerhalb des jeweiligen Toleranzbereichs generiert. Bei der Generierung des Zufallswerts kann dabei eine Gleichverteilung der Werte innerhalb des jeweiligen Toleranzbereichs zugrunde gelegt werden. Vorteilhafterweise wird die stochastische Auswahl des Korrekturwerts jedoch auf der Grundlage einer Gaußverteilung oder einer sogenannten log-Normal-Verteilung vorgenommen.

Bezüglich des Systems wird die genannte Aufgabe gelöst mit einer Auswerteeinheit, die eine Vielzahl von aus Zufalls- und aus Rechenwerten für die Parameter zusammengesetzten Testdatensätzen derart erzeugt, daß jeweils anhand der Randbedingungen Rechenwerte für eine der Anzahl der Randbedingungen entsprechende Zahl der Parameter aus Zufallswerten für die übrigen ermittelt werden, wobei jeder Zufallswert durch Modifikation des Ausgangswerts des entsprechenden Parameters um einen innerhalb eines diesem zugeordneten Toleranzbereichs stochastisch ausgewählten Korrekturwert erzeugt wird, und die aus den Testdatensätzen anhand eines vorgegebenen Filterkriteriums einen Enddatensatz auswählt.

Die mit der Erfindung erzielten Vorteile bestehen insbesondere darin, daß durch die Generierung von Testdatensätzen auf der Grundlage von Zufallswerten für einige Parameter einerseits und auf der Grundlage von Rechenwerten für andere Parameter andererseits sämtliche vorgegebenen Randbedingungen innerhalb eines Datensatzes sicher eingehalten werden können. Somit ist sichergestellt, daß jeder Testdatensatz im Hinblick auf die vorgegebenen Randbedingungen selbstkonsistent und somit konsolidiert ist. Durch die Erzeugung einer großen Vielzahl von Testdatensätzen, bei denen jeweils einige Parameter innerhalb des jeweiligen Toleranzbereichs zufällig gewählt werden, kann zudem in der Art einer Monte Carlo-Simulation eine statistische Methode anstelle eines analytischen Verfahrens zum Einsatz kommen. Gerade durch die Verwendung eines derartigen statistischen Verfahrens können auch vergleichsweise komplexe Randbedingungen, die sich beispielsweise in der Form einer Exponentialfunktion niederschlagen können ohne weiteres ausgewertet werden; eine Beschränkung auf vergleichsweise einfache Randbedingungen in der Form linearer Gleichungen ist nicht erforderlich. Die Erzeugung einer großen Vielzahl von Testdatensätzen ermöglicht zudem die Analyse des Verhaltens der Parameter bei vergleichsweise kleinen Variationen, so daß das Systemverhalten der jeweiligen technischen Anlage vergleichsweise gut abschätzbar ist.

Ein Ausführungsbeispiel der Erfindung wird anhand einer Zeichnung näher erläutert. Darin zeigen:

Fig. 1    ein System zur Auswertung eines Datensatzes,

Fig. 2    schematisch einen Wärmetauscher mit seinen relevanten Betriebsparametern,

Fig. 3    schematisch zwei Datensätze.

Gleiche Teile sind in allen Figuren mit den selben Bezugzeichen versehen.

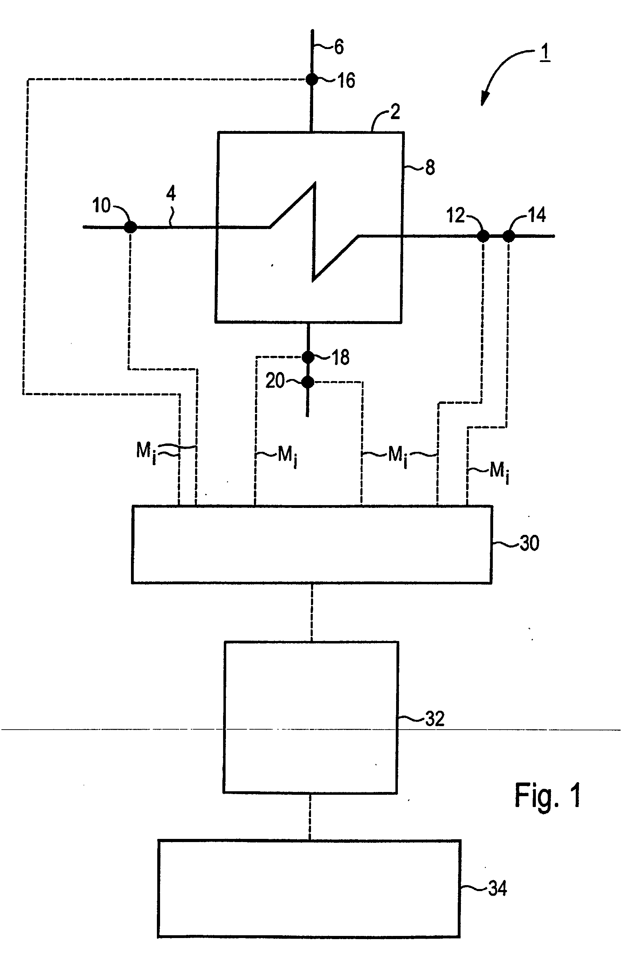

Das System 1 zur Auswertung von Daten gemäß Fig. 1 ist einer technischen Anlage oder einem Teilsystem einer technischen Anlage, im Ausführungsbeispiel einem schematisch dargestellten Wärmetauscher 2, zugeordnet. Der Wärmetauscher 2 umfaßt dabei eine in der Art einer Heizschlange ausgebildete Leitung 4 für ein Primärmedium oder ein beheizendes Medium. Desweiteren umfaßt der Wärmetauscher 2 eine Leitung 6 für ein Sekundärmedium oder zu beheizendes Medium. Die Leitungen 4, 6 sind dabei in einem ihnen gemeinsamen Gehäuse 8 derart geführt, daß ein Wärmeübertrag von dem in der Leitung 4 geführten Primärmedium auf das in der Leitung 6 geführte Sekundärmedium ermöglicht ist.

Zur Erfassung des Betriebszustands des Wärmetauschers 2 sind an den Leitungen 4, 6 eine Anzahl von Meßfühlern 10, 12, 14, 16, 18, 20 angeordnet. Diese generieren jeweils ein Meßsignal $M_i$, das über eine jeweils zugeordnete Datenleitung einer beispielsweise in eine Datenverarbeitungsanlage oder einen Personalcomputer integrierte Meßwertkarte 30 zuführbar ist. Der Meßwertkarte 30 ist datenseitig eine Auswerteeinheit 32 nachgeschaltet, die ihrerseits eine Anzahl von für den Betriebszustand des Wärmetauschers 2 charakteristischen Werten auf eine ihr nachgeschaltete Ausgabeeinheit 34 wie beispielsweise einen Bildschirm übergibt.

Beim Betrieb und insbesondere auch bei der Inbetriebnahme oder Abnahme des Wärmetauschers 2 werden über den Meßfühler 10 bis 20 eine Anzahl von Meßwerten generiert und, anhand deren Auswertung unter anderem als eine zuverlässige Funktionsweise des Wärmetauschers 2 geschlossen werden kann.

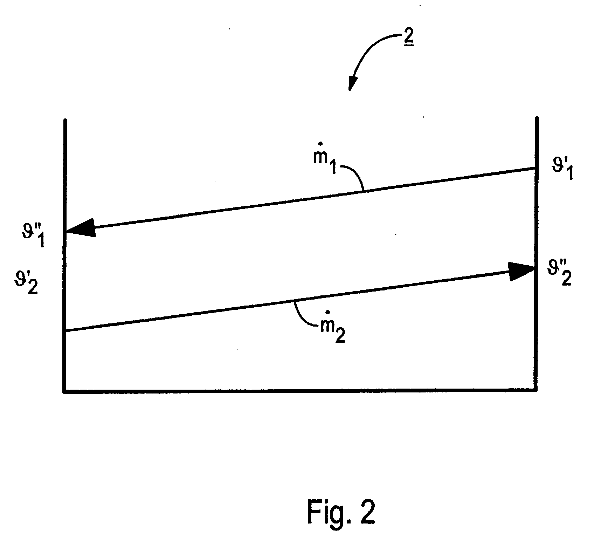

Dabei sind für den Wärmetauscher 2, der in Fig. 2 funktional-schematisch dargestellt ist, einerseits die Massenströme der ihn durchströmenden Medien, also der Massenstrom $\dot{m}_1$ des beheizenden oder Primärmediums und der Massenstrom $\dot{m}_2$ des beheizten oder Sekundärmediums von Bedeutung. Weiterhin sind die Eintrittstemperatur $\vartheta_1'$ des beheizenden oder Primärmediums bei dessen Eintritt in den Wärmetauscher 2, die Austrittstemperatur $\vartheta_1''$ des beheizenden oder Primärmediums bei dessen Austritt aus dem Wärmetauscher 2, die Eintrittstemperatur $\vartheta_2'$ des beheizten oder Sekundärmediums bei dessen Eintritt in den Wärmetauscher 2 sowie die Austrittstemperatur $\vartheta_2''$ des beheizten oder Sekundärmediums bei dessen Austritt aus dem Wärmetauscher 2 von Bedeutung. Diese Parameter sind in Fig. 2 zur Verdeutlichung in der funktional-schematischen Darstellung des Wärmetauschers 2 eingetragen.

Die Meßfühler 10 bis 20 des Systems 1 sind zur Erfassung dieser für die Charakterisierung des Betriebsverhaltens des Wärmetauschers 2 relevanten Parameter ausgestaltet. Dabei ist der Meßfühler 10, der in Strömungsrichtung des Primärmediums gesehen vor dessen Eintritt in den Wärmetauscher 2 in die Leitung 4 geschaltet ist, zur Erfassung der Eintrittstemperatur $\vartheta_1'$ des Primärmediums in den Wärmetauscher 2 und somit als Temperaturfühler ausgebildet. Die Meßfühler 12, 14 sind hingegen in Strömungsrichtung des Primärmediums gesehen nach dessen Austritt aus dem Wärmetauscher 2 in die Leitung 4 geschaltet, wobei der Meßfühler 12 ebenfalls ab Temperaturfühler und somit zur Erfassung der Austrittstemperatur $\vartheta_1'$ des Primärmediums nach dessen Austritt aus dem Wärmetauscher 2 und der Meßfühler 14 als Massenstromsensor zur Erfassung des in der Leitung 4 geführten Massenstroms $\dot{m}_1$ des Primärmediums ausgestaltet ist. Analog dazu ist der Meßfühler 16 als Temperaturfühler und zur Erfassung der Eintrittstemperatur $\vartheta_2'$ des Sekundärmediums bei dessen Eintritt in den Wärmetauscher 2 ausgebildet, wobei der Meßfühler 18 ebenfalls als Temperaturfühler und zur Erfassung der Austrittstemperatur $\vartheta_2''$ des Sekundärmediums bei dessen Austritt aus dem Wärmetauscher 2 und der Meßfühler 20 aus Massenstromsensor zur Ermittlung des Massenstroms $\dot{m}_2$ des in der Leitung 6 geführten Sekundärmediums ausgestaltet sind. Mit anderen Worten: die Meßfühler 10 bis 20 generieren in ihrer Gesamtheit einen Satz von Meßwerten $M_i$, der sämtliche für die Charakterisierung des Betriebszustands des Wärmetauschers 2 erforderlichen und verfügbaren Parameter $\dot{m}_1$, $\dot{m}_2$, $\vartheta_1'$, $\vartheta_1''$, $\vartheta_2'$ und $\vartheta_2''$ umfaßt.

Bei der Auswertung der Meßwerte $M_i$ ist jedoch zu berücksichtigen, daß jeder der Meßfühler 10 bis 20 aus systematischen Gründen nur eine beschränkte Genauigkeit aufweisen kann, so daß der von ihnen jeweils generierte Meßwert $M_i$ mit einem Meßfühler behaftet ist. Mit anderen Worten: jeder Meßwert $M_i$ gibt nur innerhalb eines zugeordneten Toleranzbereichs $T_i$ den tatsächlich oder physikalisch vorliegenden Parameter wieder. Darüber hinaus ist zu berücksichtigen, daß für das Verhalten einer technischen Anlage oder eines Teilsystems einer technischen Anlage generierte Meßwerte grundsätzlich in der Art einer Überbestimmung Randbedingungen unterliegen können, durch die einzelne der Meßwerte $M_I$ aufgrund physikalischer Gesetzmäßigkeiten mathematisch verknüpft sind. Bei dem im Ausführungsbeispiel als technische Anlage vorgesehenen Wärmetauscher 2 gilt beispielsweise aus physikalischen Gründen, daß einerseits die Enthalpiebilanz eingehalten werden muß und andererseits die Wärmeübertrager-Charakteristik $\Phi$ selbstkonsistent sein muß. Diese Randbedingungen lassen sich mathematisch wie folgt ausdrücken:

Enthalpiebilanz:

$$\dot{m}_1 \cdot cp_1 \cdot (\vartheta_1' - \vartheta_1'') = \dot{m}_2 \cdot cp_2 \cdot (\vartheta_2'' - \vartheta_2')$$

Wärmeübertrager-Charakteristik $\Phi$:

$$(\vartheta_1' - \vartheta_2'')/(\vartheta_1' - \vartheta_2') = (1 - EXP(-\kappa_1 * (1 - \dot{w}_1/\dot{w}_2)))/(1 - \dot{w}_1/\dot{w}_2 * EXP(-\kappa_1 * (1 - \dot{w}_1/\dot{w}_2))).$$

Dabei sind: $k1 = k \cdot A/\dot{w}_1$, $\dot{w}_1 = \dot{m}_1 \cdot cp_1$, $\dot{w}_2 = \dot{m}_2 \cdot cp_2$.

Aus diesen von den gemessenen Parametern notwendigerweise einzuhaltenden Randbedingungen läßt sich eine Gleichung ermitteln, die die genannten sechs Parameter $\dot{m}_1$, $\dot{m}_2$, $\vartheta_1'$, $\vartheta_1''$, $\vartheta_2'$, $\vartheta_2''$ eindeutig miteinander verknüpft. Die Meßwerte $M_i$ für diese sechs Parameter sind somit im Hinblick auf die physikalischen Randbedingungen einfach überbestimmt.

Bei der Auswertung der Meßwerte $M_i$ ist es denkbar, daß die Meßwerte $M_i$ aufgrund der vorhandenen Meßunsicherheiten, die durch die genannte Überbestimmung vorgegebene Randbedingung nicht erfüllen. Der durch die Meßwerte $M_i$ gebildete Datensatz D ist somit inkonsistent, was bei einer nachgeschalteten Auswertung zu Ungenauigkeiten oder falschen Ergebnissen führen kann.

Das System 1 ist daher dafür ausgelegt, einen aus einer Anzahl von Ausgangswerten $A_i$ gebildeten Datensatz D vor seiner weiteren Auswertung zunächst zu konsolidieren und seine Selbstkonsistenz herzustellen.

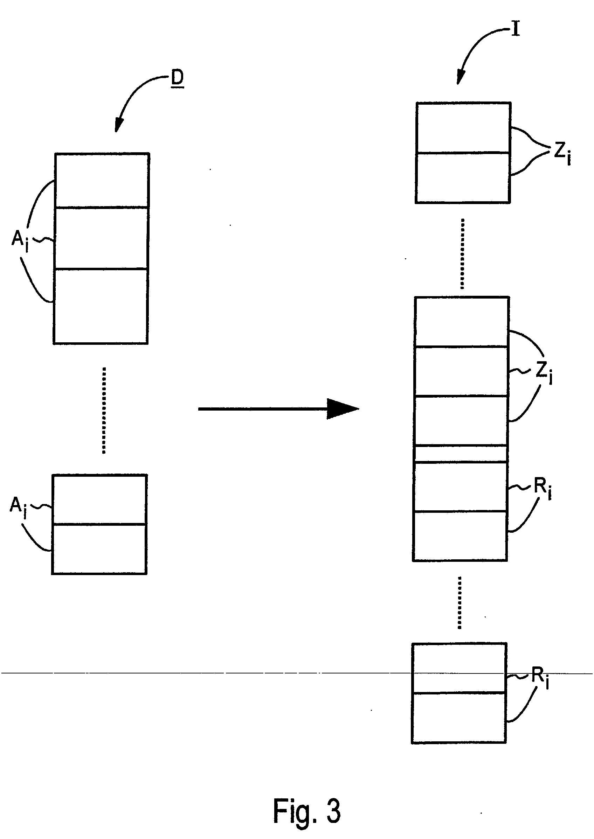

Dazu ist die Auswerteeinheit 32 des Systems 1 unter anderem für die Aufbereitung eines aus einer Anzahl von als Ausgangswerten $A_i$ vorliegenden Parametern bestehenden Datensatzes D ausgelegt, wobei im Ausführungsbeispiel die Ausgangswerte $A_i$ von den von der Meßwertkarte 30 weitergegebenen Meßwerten $M_i$ gebildet sind. Ein solcher Datensatz D ist schematisch in Fig. 3 gezeigt. Der Datensatz D ist gebildet aus den Ausgangswerten $A_i$, von denen im Ausführungsbeispiel jeder jeweils einen der genannten sechs für den Wärmetauscher 2 charakteristischen Parameter wiedergibt. Selbstverständlich können bei der Bearbeitung einer anderen technischen Anlage auch andere Ausgangswerte $A_i$ zur Bildung des Datensatzes D beitragen.

Bei der Konsolidierung des Datensatzes D soll aus diesem ein Enddatensatz erzeugt werden, bei dem Einerseits sämtliche die zugrundeliegenden Parameter verknüpfenden Randbedingungen zwingend eingehalten sind, und der andererseits die Ausgangswerte $A_i$ des ursprünglichen Datensatzes D bestmöglich annähert. Dazu wird innerhalb der Auswerteeinheit 32 bei der Aufbereitung des Datensatzes D wie folgt vorgegangen:

Zunächst werden für den Datensatz D eine Vielzahl von Testdatensätzen T erzeugt, wie dies in Fig. 3 schematisch dargestellt ist. Jeder Testdatensatz T wird dabei aus dem zugrundeliegenden Datensatz D derart erzeugt, daß die für dessen Parameter vorgegebenen Randbedingungen zwingend eingehalten sind. Dazu werden bei der Erzeugung des Testdatensatzes T in einem ersten Schritt für eine der Anzahl der Parameter im Datensatz D insgesamt abzüglich der Anzahl der Randbedingungen entsprechende Zahl von Parametern Zufallswerte $Z_i$ erzeugt. Jeder Zufallswert $Z_i$ wird dabei durch Modifikation des Ausgangswerts $A_i$ des entsprechenden Parameters um einen stochastisch ausgewählten Korrekturwert erzeugt: $Z_i = A_i + K_i$. Der Korrekturwert $K_i$ wird dabei innerhalb eines dem jeweiligen Parameter zugeordneten Toleranzbereichs $T_i$ in der Art einer Monte-Carlo-Simulation stochastisch ausgewählt, wobei eine Gaußverteilung zugrundegelegt wird. Mit anderen Worten: bei der Erzeugung des Zufallswerts $Z_i$ wird der ursprüngliche Ausgangswert $A_i$ in dem Sinne angenähert, daß lediglich eine Abweichung innerhalb des für den Ausgangswert $A_i$ ohnehin zu berücksichtigenden Toleranzbereichs $T_i$, also dessen Meßgenauigkeit, zugelassen wird.

Die solchermaßen gebildeten Zufallswerte $Z_i$ bilden in ihrer Gesamtheit noch keinen vollständigen Testdatensatz T; vielmehr sind zu dessen Vervollständigung noch eine der Anzahl der Randbedingungen entsprechende Zahl weiterer Parameterwerte erforderlich. Für diese weiteren Parameterwerte werden auf der Grundlage der die Randbedingungen wiedergebenden mathematischen Beziehungen Rechenwerte $R_i$ anhand der Zufallswerte $Z_i$ für die übrigen Parameter ermittelt. Im Ausführungsbeispiel mit dem einfach überbestimmten Datensatz D werden somit für fünf der Parameter Zufallswerte $Z_i$ erzeugt, aus denen anhand der die Randbedingungen charakterisierenden Gleichung ein Rechenwert $R_i$ für den sechsten Parameter ermittelt wird. Auf diese Weise ist sichergestellt, daß infolge der rechnerischen Ermittlung der Rechenwerte $R_i$ anhand der für die weiteren Parameter zugrundegelegten Zufallswerte $Z_i$ oder Rechenwerte $R_i$ die vorgegebenen Randbedingungen sicher eingehalten sind.

Jeder Testdatensatz T, der einerseits aus Zufallswerten $Z_i$ für einige der Parameter und andererseits aus Rechenwerten $R_i$ für die anderen Parameter gebildet ist, ist somit im Hinblick auf die vorgegebenen Randbedingungen sicher selbstkonsistent. Bei der Aufbereitung des Datensatzes D werden in der Art einer Monte-Carlo-Simulation eine große Vielzahl dieser Testdatensätze T erzeugt, so daß aufgrund des stochastischen Vorgabe der Korrekturwerte $K_i$ das Toleranzband $T_i$ jedes Ausgangswertes $A_i$ weitgehend überstrichen wird. Für die weitere Auswertung werden die Testdatensätze T zunächst einem weiteren Filter unterzogen. Dabei wird für jeden anhand der Randbedingungen errechneten Parameter für dessen Rechenwert $R_i$ überprüft, ob dieser Rechenwert $R_i$ innerhalb des Toleranzbereichs $T_i$ des Ausgangswerts $A_i$ für den entsprechenden Parameter liegt. Mit anderen Worten: es wird überprüft, ob der jeweilige Rechenwert $R_i$ innerhalb der Meßgenauigkeit des jeweiligen Parameters mit dem für diesen als Meßwert $M_i$ ermittelten Ausgangswert $A_i$ vereinbar ist. Nur wenn dies für alle ermittelten Rechenwerte $R_i$ eines Testdatensatzes T erfüllt ist, wird dieser Testdatensatz T als vereinbar mit den ursprünglich gewonnenen Meßwerten $M_i$ angesehen und für eine weitere Auswertung zugelassen.

Aus den solchermaßen gefilterten Testdatensätzen T wird in einem weiteren Schritt bei der Aufbereitung des Datensatzes D derjenige als Enddatensatz ausgewählt, der dem ursprünglichen Datensatz D im Hinblick auf ein vorgegebenes Filterkriterium am nächsten kommt. Dazu wird für jeden Parameterwert des Testdatensatzes T, also für den jeweiligen Zufallswert $Z_i$ beziehungsweise für den jeweiligen Rechenwert $R_i$, dessen Abweichung vom ursprünglichen Ausgangswert $A_i$ für den entsprechenden Parameter ermittelt. Anschließend wird die Summe der Quadrate dieser Abweichungen für sämtliche Parameter bestimmt und als Maß für die Abweichung des jeweiligen Testdatensatzes T vom ursprünglichen Datensatz D herangezogen. Dabei wird derjenige Testdatensatz T als dem ursprünglichen am nächsten kommend angesehen und somit als Enddatensatz ausgewählt, bei dem die Summe der Quadrate der Parameterabweichungen einen Minimalwert einnimmt.

Bei der Auswertung der Quadrate der Parameterabweichungen kann dabei jede Parameterabweichung mit einem dem jeweiligen Parameter zugeordneten Wichtungsfaktor in die Summe einfließen. Der Wichtungsfaktor kann dabei insbesondere auch der Genauigkeit der den jeweiligen Parameter liefernden Messung oder der zugeordneten Meßfühler Rechnung tragen. Dabei kann der Wichtungsfaktor umso größer gewählt sein, je genauer oder verläßlicher die jeweils zugeordnete Messung ist. Desweiteren kann die Parameterabweichung jeweils als sogenannte absolute Abweichung berücksichtigt werden. Im Ausführungsbeispiel ist jedoch die Auswertung einer sogenannten relativen Abweichung vorgesehen, wobei die Parameterabweichung vor ihrer weiteren Berücksichtigung durch Division durch den Ausgangswert $A_i$ des entsprechenden Parameters zunächst normiert wird.

Bezugszeichenliste

| | |
|---|---|
| 1 | System |
| 2 | Wärmetauscher |
| 4, 6 | Leitungen |
| 8 | Gehäuse |
| 10, 12, 14, 16, 18, 20 | Meßfühler |
| 30 | Meßwertkarte |
| 32 | Auswerteeinheit |
| 34 | Ausgabeeinheit |
| D | Datensatz |
| $M_i$ | Meßwerte |
| $A_i$ | Ausgangswerte |
| $\Phi$ | Wärmeübertrager-Charakteristik |
| $T_i$ | Toleranzbereich |
| T | Testdatensätze |
| $Z_i$ | Zufallswerte |
| $K_i$ | Korrekturwert |
| $R_i$ | Rechenwerte |
| $\dot{m}_1, \dot{m}_2, \vartheta_1', \vartheta_1'', \vartheta_2', \vartheta_2''$ | Parameter |

**Patentansprüche**

1.  Verfahren zur Aufbereitung eines aus einer Anzahl von als Ausgangswerte ($A_i$) vorliegenden Parametern ($\dot{m}_1, \dot{m}_2, \vartheta_1', \vartheta_1'', \vartheta_2', \vartheta_2''$) bestehenden Datensatzes (D), die einer Anzahl von vorgegebenen Randbedingungen unterworfen sind, bei dem eine Vielzahl von aus Zufalls- und aus Rechenwerten ($Z_i$, $R_i$) für die Parameter ($\dot{m}_1, \dot{m}_2, \vartheta_1', \vartheta_1'', \vartheta_2', \vartheta_2''$) zusammengesetzten Testdatensätzen (T) derart erzeugt werden, daß jeweils anhand der Randbedingungen Rechenwerte ($R_i$) für eine der Anzahl der Randbedingungen entsprechende Zahl der Parameter ($\dot{m}_1, \dot{m}_2, \vartheta_1', \vartheta_1'', \vartheta_2', \vartheta_2''$) aus Zufallswerten ($Z_i$) für die übrigen Parameter ($\dot{m}_1, \dot{m}_2, \vartheta_1', \vartheta_1'', \vartheta_2', \vartheta_2''$) ermittelt werden, wobei jeder Zufallswert ($Z_i$) durch Modifikation des Ausgangswerts ($A_i$) des entsprechenden Parameters ($\dot{m}_1, \dot{m}_2, \vartheta_1', \vartheta_1'', \vartheta_2', \vartheta_2''$) um einen innerhalb eines diesem zugeordneten Toleranzbereichs ($T_i$) stochastisch ausgewählten

Korrekturwert ($K_i$) erzeugt wird, und bei dem aus den Testdatensätzen (T) anhand eines vorgegebenen Filterkriteriums ein Enddatensatz ausgewählt wird.

2. Verfahren nach Anspruch 1, bei dem die Ausgangswerte ($A_i$) als Meßwerte ($M_i$) vorliegen.

3. Verfahren nach Anspruch 1 oder 2, bei dem ein Testdatensatz (T) bei der Auswahl des Enddatensatzes nur dann berücksichtigt wird, wenn jeder Rechenwert ($R_i$) des Testdatensatzes (T) jeweils innerhalb eines dem entsprechenden Parameter ($\dot{m}_1, \dot{m}_2, \vartheta_1', \vartheta_1'', \vartheta_2', \vartheta_2''$) zugeordneten Toleranzbereichs ($T_i$) liegt.

4. Verfahren nach einem der Ansprüche 1 bis 3, bei dem als Enddatensatz derjenige Testdatensatz (T) ausgewählt wird, bei dem die Summe der Quadrate der Abweichungen des Rechen- bzw. Zufallswerts ($R_i$, $Z_i$) vom Ausgangswert jedes Parameters ($\dot{m}_1, \dot{m}_2, \vartheta_1', \vartheta_1'', \vartheta_2', \vartheta_2''$) minimal ist.

5. Verfahren nach einem der Ansprüche 1 bis 4, bei dem die stochastische Auswahl des Korrekturwerts ($K_i$) auf der Grundlage einer Gaußverteilung oder einer log-Normal-Verteilung vorgenommen wird.

6. System (1) zur Aufbereitung eines aus einer Anzahl von als Ausgangswerte ($A_i$) vorliegenden Parametern ($\dot{m}_1, \dot{m}_2, \vartheta_1', \vartheta_1'', \vartheta_2', \vartheta_2''$) bestehenden Datensatzes (D), die einer Anzahl von vorgegebenen Randbedingungen unterworfen sind, mit einer Auswerteeinheit (32), die eine Vielzahl von aus Zufalls- und aus Rechenwerten ($Z_i$, $R_i$) für die Parameter ($\dot{m}_1, \dot{m}_2, \vartheta_1', \vartheta_1'', \vartheta_2', \vartheta_2''$) zusammengesetzten Testdatensätzen (T) derart erzeugt, daß jeweils anhand der Randbedingungen Rechenwerte ($R_i$) für eine der Anzahl der Randbedingungen entsprechende Zahl der Parameter ($\dot{m}_1, \dot{m}_2, \vartheta_1', \vartheta_1'', \vartheta_2', \vartheta_2''$) aus Zufallswerten ($Z_i$) für die übrigen ($\dot{m}_1, \dot{m}_2, \vartheta_1', \vartheta_1'', \vartheta_2', \vartheta_2''$) ermittelt werden, wobei jeder Zufallswert ($Z_i$) durch Modifikation des Ausgangswerts ($A_i$) des entsprechenden Parameters ($\dot{m}_1, \dot{m}_2, \vartheta_1', \vartheta_1'', \vartheta_2', \vartheta_2''$) um einen innerhalb eines diesem zugeordneten Toleranzbereichs ($T_i$) stochastisch ausgewählten Korrekturwert ($K_i$) erzeugt wird, und die aus den Testdatensätzen (T) anhand eines vorgegebenen Filterkriteriums einen Enddatensatz auswählt.

Fig. 1

Fig. 2

Fig. 3

**Europäisches Patentamt**

**EUROPÄISCHER RECHERCHENBERICHT**

Nummer der Anmeldung

EP 02 00 0744

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 94 20887 A (PAVILION TECH INC) 15. September 1994 (1994-09-15) * Seite 3, Zeile 22 - Seite 4, Zeile 13 * * Seite 6, Zeile 1 - Seite 7, Zeile 18 * * Seite 9, Zeile 13 - Seite 10, Zeile 25 * * Seite 11, Zeile 9 - Seite 12, Zeile 17 * * Seite 16, Zeile 18 - Seite 18, Zeile 16 * * Seite 23, Zeile 15 - Zeile 26 * * Seite 29, Zeile 9 - Seite 32, Zeile 6 * --- | 1-6 | G06F17/11 G06F17/10 G06F17/12 |
| A | US 5 781 432 A (HARTMAN ERIC JON ET AL) 14. Juli 1998 (1998-07-14) * Spalte 1, Zeile 60 - Spalte 2, Zeile 55 * * Spalte 5, Zeile 41 - Spalte 6, Zeile 37 * * Spalte 7, Zeile 24 - Spalte 11, Zeile 23 * --- | 1-6 | |
| A | EP 0 794 631 A (KOKUSAI DENSHIN DENWA CO LTD) 10. September 1997 (1997-09-10) * Seite 3, Zeile 14 - Seite 4, Zeile 1 * * Seite 8, Zeile 44 - Seite 9, Zeile 40 * * Seite 11, Zeile 16 - Seite 12, Zeile 35 * --- | 1-6 | **RECHERCHIERTE SACHGEBIETE (Int.Cl.7)** G06F |

-/--

Der vorliegende Recherchenbericht wurde für alle Patentansprüche erstellt

| Recherchenort | Abschlußdatum der Recherche | Prüfer |
|---|---|---|
| MÜNCHEN | 27. Dezember 2002 | Barba, M |

**Europäisches Patentamt**

**EUROPÄISCHER RECHERCHENBERICHT**

Nummer der Anmeldung

EP 02 00 0744

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | SRINIVASAN S ET AL: "IMAGE STABILIZATION AND MOSAICKING USING THE OVERLAPPED BASIS OPTICAL FLOW FIELD" PROCEEDINGS OF THE INTERNATIONAL CONFERENCE ON IMAGE PROCESSING. ICIP 1998. SANTA BARBARA, CA, OCT. 26 - 29, 1997, LOS ALAMITOS, CA: IEEE COMPUTER SOCIETY, US, Bd. 3, 26. Oktober 1997 (1997-10-26), Seiten 356-359, XP000780905 ISBN: 0-8186-8184-5 * Seite 357, rechte Spalte, Zeile 44 - Seite 358, rechte Spalte, Zeile 25 * | 1-6 | |
| A | ESSAME D ET AL: "Available fail-safe systems" DISTRIBUTED COMPUTING SYSTEMS, 1997., PROCEEDINGS OF THE SIXTH IEEE COMPUTER SOCIETY WORKSHOP ON FUTURE TRENDS OF TUNIS, TUNISIA 29-31 OCT. 1997, LOS ALAMITOS, CA, USA,IEEE COMPUT. SOC, US, 29. Oktober 1997 (1997-10-29), Seiten 176-182, XP010261189 ISBN: 0-8186-8153-5 * Seite 177, linke Spalte, Zeile 1 - Zeile 13 * * Seite 177, linke Spalte, Zeile 41 - rechte Spalte, Zeile 5 * * Seite 178, linke Spalte, Zeile 1 - Zeile 22 * * Seite 178, linke Spalte, Zeile 25 - Seite 179, linke Spalte, Zeile 36 * * Seite 181, linke Spalte, Zeile 24 - Seite 182, linke Spalte, Zeile 51 * | 1-6 | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| MÜNCHEN | 27. Dezember 2002 | Barba, M |

**ANHANG ZUM EUROPÄISCHEN RECHERCHENBERICHT
ÜBER DIE EUROPÄISCHE PATENTANMELDUNG NR.**

EP 02 00 0744

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-12-2002

| Im Recherchenbericht angeführtes Patentdokument | | Datum der Veröffentlichung | Mitglied(er) der Patentfamilie | | Datum der Veröffentlichung |
|---|---|---|---|---|---|
| WO 9420887 | A | 15-09-1994 | AU | 6358394 A | 26-09-1994 |
| | | | CA | 2157198 A1 | 15-09-1994 |
| | | | EP | 0687369 A1 | 20-12-1995 |
| | | | WO | 9420887 A2 | 15-09-1994 |
| | | | US | 6216048 B1 | 10-04-2001 |
| | | | US | 5825646 A | 20-10-1998 |
| | | | US | 5781432 A | 14-07-1998 |
| US 5781432 | A | 14-07-1998 | AU | 6358394 A | 26-09-1994 |
| | | | CA | 2157198 A1 | 15-09-1994 |
| | | | EP | 0687369 A1 | 20-12-1995 |
| | | | WO | 9420887 A2 | 15-09-1994 |
| | | | US | 6216048 B1 | 10-04-2001 |
| | | | US | 5825646 A | 20-10-1998 |
| EP 0794631 | A | 10-09-1997 | EP | 0794631 A2 | 10-09-1997 |
| | | | JP | 9298526 A | 18-11-1997 |
| | | | US | 5907563 A | 25-05-1999 |

EPO FORM P0461

Für nähere Einzelheiten zu diesem Anhang : siehe Amtsblatt des Europäischen Patentamts, Nr.12/82